(19) **Europäisches Patentamt / European Patent Office / Office européen des brevets**

(11) **EP 2 498 534 B1**

(12) **EUROPEAN PATENT SPECIFICATION**

(45) Date of publication and mention
of the grant of the patent:
**18.11.2020 Bulletin 2020/47**

(51) Int Cl.:
*H04W 28/00* (2009.01)     *H04W 52/00* (2009.01)
*H04L 1/00* (2006.01)     *H04L 5/00* (2006.01)
*H04W 48/16* (2009.01)     *H04W 72/08* (2009.01)

(21) Application number: **10809558.9**

(22) Date of filing: **17.08.2010**

(86) International application number:
**PCT/CN2010/076063**

(87) International publication number:
**WO 2011/020425 (24.02.2011 Gazette 2011/08)**

(54) **CONFIGURATION METHOD, SYSTEM AND DEVICE FOR UPLINK CHANNEL**

KONFIGURATIONSVERFAHREN, SYSTEM UND VORRICHTUNG FÜR EINEN UPLINK-KANAL

PROCÉDÉ, SYSTÈME ET DISPOSITIF DE CONFIGURATION D'UN CANAL SUR LA LIAISON MONTANTE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **17.08.2009  CN 200910091281**

(43) Date of publication of application:
**12.09.2012 Bulletin 2012/37**

(73) Proprietor: **China Academy of
Telecommunications Technology
Haidian District
Beijing 100191 (CN)**

(72) Inventors:
• **PAN, Xueming
Beijing 100083 (CN)**
• **XIAO, Guojun
Beijing 100083 (CN)**

(74) Representative: **Lantos, Mihaly
Danubia
Patent & Law Office LLC
Bajcsy-Zsilinszky út 16
1051 Budapest (HU)**

(56) References cited:
**EP-A1- 1 895 697       WO-A1-2009/020358
WO-A2-2008/055235    CN-A- 1 810 048
US-A1- 2003 219 037    US-A1- 2009 103 482**

• **NOKIA SIEMENS NETWORKS ET AL: "UL control
signalling to support bandwidth extension in
LTEAdvanced", 3GPP DRAFT; R1-090234, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, no. Ljubljana; 20090107, 7
January 2009 (2009-01-07), XP050318163,
[retrieved on 2009-01-07]**

**Description**

**FIELD OF THE PRESENT INVENTION**

The present invention relates to the field of wireless communication technology, and more particularly to configuration method , system and device for uplink channel.

**BACKGROUND OF THE PRESENT INVENTION**

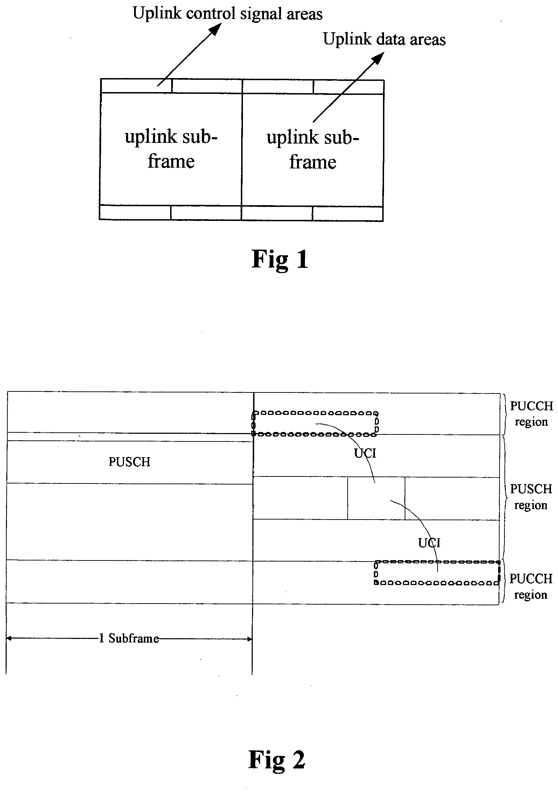

In the LTE (Long Term Evolution) R8 system, there are two uplink physical channels named PUSCH (Physical Uplink Shared Channel) and PUCCH (Physical Uplink Control Channel). PUCCH mainly carries UCI (Uplink Control Information), including ACK/NACK HARQ (Hybrid Automatic Retransmission request) acknowledgement information, CQI (channel quality information), SR (scheduling request), and so on. PUCCH is sent on both sides in the system bandwidth of uplink sub-frame. As shown in Fig. 1, UEs are multiplexed by CDM (code division multiplexing) and/or FDM (frequency division multiplexing). PUSCH is mainly used to carry uplink service data, which is sent in the system bandwidth except PUCCH area of the sub-frame. As shown in Fig. 1, UEs are multiplexed by the FDM scheme.
LTE R8 uplink transmission scheme was designed with the strict single carrier characteristics, only one physical channel or signal is sent in an uplink subframe for each UE. Therefore, when a UE is scheduled to send both PUSCH and PUCCH in an uplink sub-frame, it needs to insert the UCI into PUSCH to ensure single carrier characteristics, as shown by the second sub-frame in Fig. 2. In LTE R8, the power control of PUSCH and PUCCH is independent closed-loop operation. Since only one of PUSCH or PUCCH can be send by a UE in an uplink sub-frame, the power control of each subframe is controlled by the PUSCH or PUCCH control command. The uplink power headroom report (PHR) is described in the LTE R8. The UE calculates the PHR of the current sub-frame and reports it to a network device. The network decides the MCS (Modulation and Coding Scheme) and resource allocation for next uplink data transmission by the PHR reported and the power limitation is avoided. PHR is defined as a difference between the transmitting power of PUSCH in sub-frame i and the maximum transmitting power of the UE:

$$PH\ (i) = P_{\mathrm{CMAX}} - P_{\mathrm{PUSCH}}(i) \qquad (1)$$

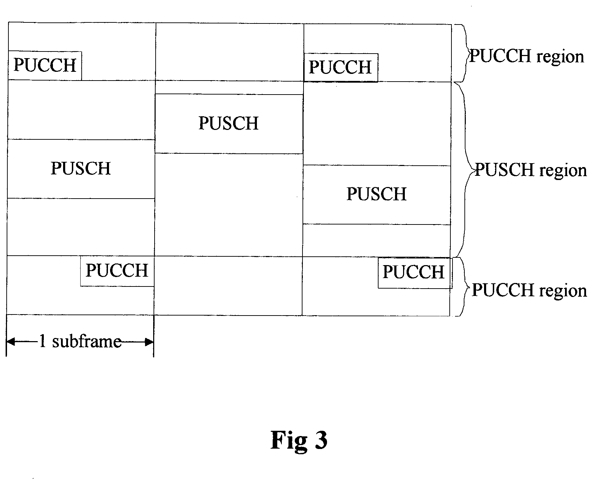

EP1895697A1 discloses that all the HS-SCCHs and HS-SICHs of a same UE are selected to be on a same carrier and only one pair of uplink and downlink associate channels is allocated to the same UE on the same carrier so that it is simple for the UE to realize and the utilization ratio of resources is improved.
Non-patent literature titled "UL control signalling to support bandwidth extension in LTE-Advanced" discloses further views on different UL control signalling options to support separate PDCCH approach in LTE-Advanced.
US20090103482A1 discloses systems and methods for using an existing format of an uplink control channel to transmit CQIs.
WO2009020358A1 discloses a method of transmitting uplink control signals in a wireless communication system, by which the scheduling request can be transmitted while minimizing decrease in capability of the control channels.
LTE-Advanced system relaxes requirement on the uplink single carrier characteristics, and permits the UE to send data both in PUSCH and PUCCH at the same time, as shown in Fig. 3. However there is not yet a specific scheme on configuring the CQI (channel quality information) for sending data both in PUSCH and PUCCH.
The object or task of the present invention is to optimize the uplink channel configuration in accordance with different situations, when the uplink transmission mode is a transmission mode with the single carrier characteristics and when the uplink transmission mode is another transmission mode with the multi-carrier characteristics, such that uplink channel configuration can be optimized.

**SUMMARY OF THE PRESENT INVENTION**

The object of the invention can be attained by providing an uplink channel configuration method as claims in the attached claims 1 to 4 and 5, a network side device as claimed in claims 6 and 7, as well as a user equipment as claimed in claim 8.

**BRIEF DESCRIPTION OF THE DRAWINGS**

Fig. 1 is a structure of LTE R8 uplink channel according to the present technology;

Fig. 2 is a diagram for sending the PUSCH having UCIs inserted therein according to the present technology;

Fig. 3 is another diagram for sending the PUSCH having UCIs inserted therein according to the present technology;

Fig. 4 is a flow diagram of a method for uplink channel configuration according to an embodiment of the present invention;

Fig. 5 is a flow diagram of a method for uplink channel configuration according to another embodiment of the present invention;

Fig. 6 is a flow diagram of a method for uplink channel configuration according to yet another embodiment of the present invention;

Fig. 7 is a structure diagram of a network side device according to an embodiment of the present invention; and

Fig. 8 is a structure diagram of a UE according to an embodiment of the present invention.

## DETAILED DESCRIPTION OF THE EMBODIMENTS OF THE PRESENT INVENTION

To solve the problems the present technology exists, in embodiment of the present invention, a network side device configures the uplink transmission mode of a UE. When the uplink transmission mode to be configured is different from the current transfer mode of the UE, the network side device transmits information about the uplink transmission mode to the UE, as well as enables the UE to adopt the uplink transmission mode for uplink transmission, obtains the channel quality information (CQI) accordingly, and reports the CQI to the network side device. The network side device receives the CQI reported by the UE; and the network side device configures the uplink channel according to the CQI.

In the following parts, clear and complete descriptions of the technology programs of the present invention are made in connection with drawings of the embodiments. It is clear that the embodiments of the present invention described here are only parts of the embodiments of the present invention. According to the embodiments of the present invention, any other embodiments made by technical personnel of the field in the absence of creative work are all belong to the scope of the patent protection of the invention.

For example, a network side device includes a neighborhood cell, a Node B, an eNB or other communication entity, but is not restricted thereto. Other devices which can have network side functions all belong to the invention of the scope of protection. In embodiments of the present invention, the network side device takes a base station as an example for illustration.

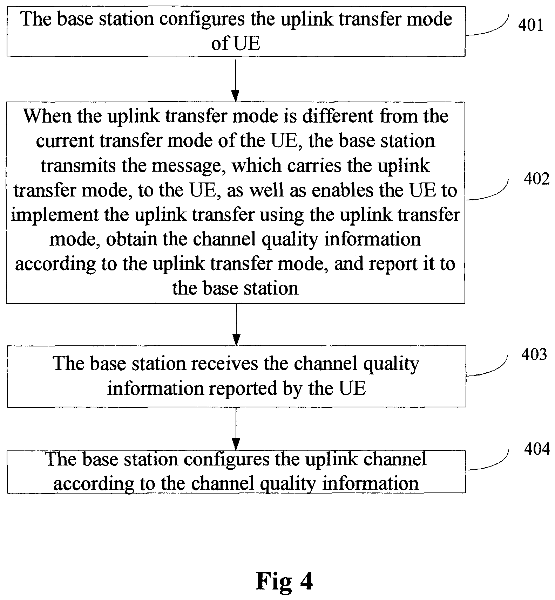

Embodiments of the present invention provide a method for an uplink channel configuration, as shown in Fig. 4, including the following steps:

Step 401, the base station configures the uplink transmission mode of a UE;

Step 402, when the uplink transmission mode to be configured is different from its current transmission mode of the UE, the base station transmits the information about the uplink transmission mode to the UE, as well as enables the UE to adopt the uplink transmission mode for uplink transmission, obtains the CQI according to the uplink transmission mode, and reports the CQI to the base station;

Step 403, the base station receives the CQI reported by the UE; and

Step 404, the base station configures the uplink channel accordingly.

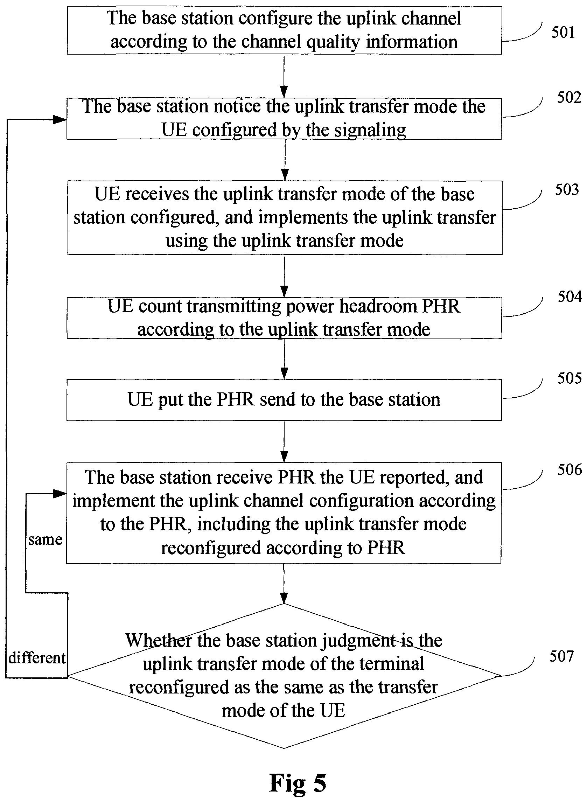

Embodiments of the present invention further provide a method for an uplink channel configuration, as shown in Fig. 5, including the following steps:

Step 501, the base station configures the uplink channel according to the channel quality information, including the base station configuring uplink transmission modes.

The uplink transmission modes include the following two modes:

One of the uplink transmission modes: The uplink transmission mode of UE is with the single carrier characteristics.

The uplink transmission of UE in a sub-frame on the PUSCH or PUCCH is for data transmission. When both PUSCH and PUCCH are needed for data transmission at the same time, UCIs used for PUCCH transmission are inserted into the PUSCH transmission.

The other uplink transmission mode of UE is with the multi-carrier characteristics.

The uplink transmission of the UE in a sub-frame on the PUSCH and PUCCH is for data transmission at the same time. Of course, it can be for data transmission by one of PUSCH and PUCCH.

Because the power for the first uplink transmission mode used by the UE is less than that for the second uplink transmission mode, the base station configures the first uplink transmission mode for the UE, at the same time the base station uses independent closed-loop control with respect to the PUSCH and PUCCH.

Step 502, the base station notifies the UE of the uplink transmission mode configured by the signaling.

Preferably, the base station notifies the UE by an up-level RRC signaling or an MAC signaling.

Step 503, UE receives the uplink transmission mode of the base station configured, and adopts the uplink transmission mode for uplink transmission.

Step 504, UE calculates transmitting power headroom PHR according to the uplink transmission mode.

When the UE adopts the uplink transmission mode with the first uplink transmission mode, the base station uses independent closed-loop control towards the PUSCH and PUCCH, the PHR formula is as below:

$$PH\ (i) = P_{\mathrm{CMAX}} - P_{\mathrm{PUSCH}}(i) \tag{2}$$

where $P_{\mathrm{CMAX}}$ is the maximum transmission power allowed of the UE, $P_{\mathrm{PUSCH}}$ (i) is the transmission power of PUSCH in the sub-frame i, and PH(i) is the transmitting power headroom for the sub-frame i. PH(i) is also the difference between the $P_{\mathrm{CMAX}}$ and $P_{\mathrm{PUSCH}}(i)$, namely the PHR reported to the base station by the UE.

When the UE adopts the uplink transmission mode with the second uplink transmission mode, the base station uses independent closed-loop control towards the PUSCH and PUCCH, the PHR formula is as below:

$$PH\ (i) = P_{\mathrm{CMAX}} - P_{\mathrm{PUSCH}}(i) - P_{\mathrm{PUCCH}}(i) \tag{3}$$

where $P_{\mathrm{CMAX}}$ is the maximum transmission power allowed of the UE, $P_{\mathrm{PUSCH}}$ (i) is the transmission power of PUSCH in the sub-frame i, $P_{\mathrm{PUCCH}}$ is the transmission power of PUCCH in the sub-frame i, and PH (i) is the transmitting power headroom for the sub-frame i, PH(i) is also the difference between the $P_{\mathrm{CMAX}}$ and $P_{\mathrm{PUSCH}}(i)$, namely the PHR reported to the base station by the UE. Now, when the uplink channel in the sub-frame of UE is adopted to transmit only in PUSCH, the $P_{\mathrm{PUCCH}}$ (i) is zero in formula 3.

Step 505, the UE sends the PHR to the base station.

Step 506, the base station receives the PHR reported by the UE, and adopts the uplink channel configuration according to the PHR, including the uplink transmission mode reconfigured according to PHR.

The base station adopts the uplink channel configuration according to the PHR is that, the higher the level is, the more of the allocated physical resources are, the greater the transmitting power of the UE is. Therefore, the base station decides the MCS and resource allocation of the next uplink data scheduling according to the PHR reported by the UE, in order to avoid the limited transmit power problem imposed on the UE.

The base station has two ways to reconfigure the uplink transmission mode according to the PHR. One is that the base station sets up a PHR threshold PHR_thr, according to a relationship between the PHR the UE reported and the threshold PHR_thr to configure uplink transmission mode; the other is the base station sets up two PHR thresholds namely PHR_thr1 and PHR_thr2, PHR_thr1<PHR_thr2, according to the relationship between the PHR the UE reported and the threshold PHR_thr1 or PHR_thr2 to configure the uplink transmission mode.

In embodiments of the present invention, the base station uses the first way according to PHR to reconfigure the uplink transmission mode as an example for illustration.

Especially, the base station adopting the first way includes the following steps according to the PHR to reconfigure the uplink transmission mode:

(1) The base station sets up the PHR threshold PHR_thr, the setting of PHR_thr is achieved according to the simulation results or the actual test.
(2) The base station reconfigures the uplink transmission mode according to the relationship between the PHR the UE reported and the threshold PHR_thr.

When the PHR the UE reported is greater than the threshold PHR_thr, the base station arranges the second configuration uplink transmission mode for the UE;
When the PHR the UE reported is less than the threshold PHR_thr, the base station arranges the first uplink transmission mode for the UE.

The above judgment indicates that, when the PHR the UE reported is greater than the threshold PHR_thr, the transmission power of PUSCH is less than the PHR, then the base station arranges the second configuration uplink transmission mode for the UE; when the PHR the UE reported is less than the threshold PHR_thr, the transmission power of PUSCH and the PHR are both greater, then the base station arranges the first configuration uplink transmission mode for the UE.

The PHR reported by the UE may be an instantaneous PHR in the sub-frame i, also may be the result after a smoothing operation on the reported PHR for a period of time.

Step 507, the base station determines whether the reconfigured uplink transmission mode of the UE is the same as its current transmission mode of the UE.

When the judgment result is the same, the base station will not send the configured uplink transmission mode to the UE by signaling, and turn to step 506.

When the judgment result is different, the base station will send the configured uplink transmission mode to the UE by signaling, the UE switches to the uplink transmission mode configured by the base station, and turns to step 502.

The two processes are in a complementary relationship between the above uplink transmission mode configuration and the calculation of PHR. When the base station configures uplink transmission mode, then UE calculates the PHR according to the uplink transmission mode. When UE finishes calculation of PHR, the base station configures transmission mode according to the obtained PHR. When the UE accesses for the first time, the base station configures uplink transmission mode for the UE. Preferably, the base station configures the first uplink transmission mode for the UE.

In embodiments of the present invention, the uplink transmission mode is configured according to transmitting PHR by the base station, but which is not limited to this. Whatever can indicate the channel quality parameters as good or bad may be used to configure the uplink transmission mode. Furthermore, the base station can not only configure uplink transmission mode, but also do other channel configuration according to the channel quality parameters.

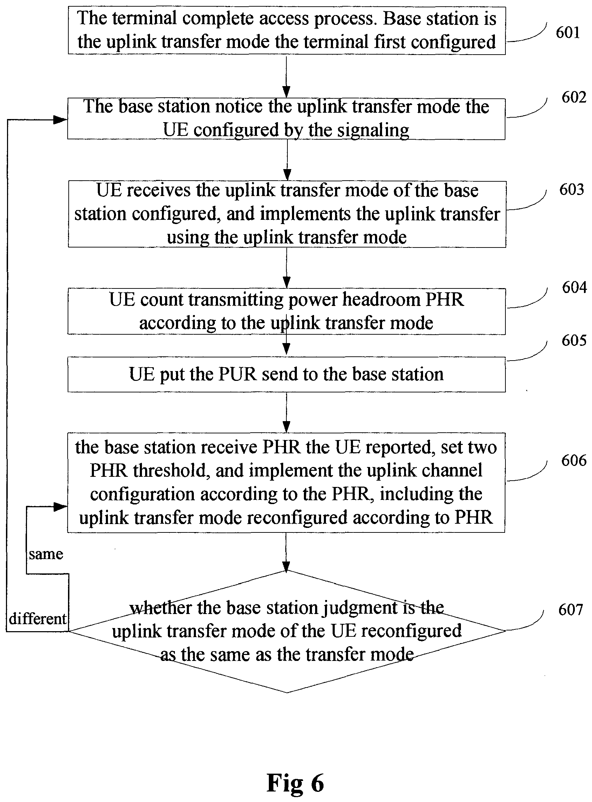

Embodiments of the present invention further provide a method for an uplink channel configuration, as shown in Fig. 6, including the following steps:

Step 601, the UE completes an initial access procedure. The base station configures the uplink transmission mode for the UE for the first time.

The uplink transmission modes include the following two modes:

One of the uplink transmission modes: The uplink transmission mode of UE is with the single carrier characteristics.

The uplink transmission of UE in a sub-frame on the PUSCH or PUCCH is for data transmission. When both PUSCH and PUCCH are needed for data transmission at the same time, UCIs used for PUCCH transmission are inserted into the PUSCH transmission.

The other uplink transmission mode of UE is with the multi-carrier characteristics.

The uplink transmission of the UE in a sub-frame on the PUSCH and PUCCH is for data transmission at the same time. Of course, it can be for data transmission by one of PUSCH and PUCCH.

Because the power for the first uplink transmission mode used by the UE is less than that for the second uplink transmission mode, the base station configures the first uplink transmission mode for the UE, at the same time the base station uses independent closed-loop control with respect to the PUSCH and PUCCH.

Step 602, the base station notifies the UE of the uplink transmission mode configured by the signaling.

Preferably, the base station notifies the UE by an up-level RRC signaling or an MAC signaling.

Step 603, UE receives the uplink transmission mode of the base station configured, and adopts the uplink transmission mode for uplink transmission.

Step 604, UE calculates transmitting PHR according to the uplink transmission mode.

When the UE adopts the uplink transmission mode for uplink transmission, the base station uses independent closed-loop control towards the PUSCH and PUCCH, the PHR formula is as below:

$$PH\ (i) = P_{\mathrm{CMAX}} - P_{\mathrm{PUSCH}}(i) \qquad (4)$$

where $P_{\mathrm{CMAX}}$ is the maximum transmission power allowed of the UE, $P_{\mathrm{PUSCH}}$ (i) is the transmission power of PUSCH in the sub-frame i, and PH(i) is the transmitting power headroom for the sub-frame i. PH(i) is also the difference between the $P_{\mathrm{CMAX}}$ and $P_{\mathrm{PUSCH}}$(i), namely the PHR reported to the base station by the UE.

When UE adopts the uplink transmission mode for uplink transmission, the PHR formula is as below:

$$PH\ (i) = P_{\mathrm{CMAX}} - P_{\mathrm{PUSCH}}(i) - P_{\mathrm{PUCCH}}(i) \qquad (5)$$

where $P_{\mathrm{CMAX}}$ is the maximum transmission power allowed of the UE, $P_{\mathrm{PUSCH}}$ (i) is the transmission power of PUSCH in the sub-frame i, $P_{\mathrm{PUCCH}}$ is the transmission power of PUCCH in the sub-frame i, and PH (i) is the transmitting power headroom for the sub-frame i, PH(i) is also the difference between the $P_{\mathrm{CMAX}}$ and $P_{\mathrm{PUSCH}}$(i), namely the PHR reported to the base station by the UE. Now, when the uplink channel in the sub-frame of UE is adopted to transmit only in PUSCH, the $P_{\mathrm{PUCCH}}$ (i) is zero in formula 5.

Step 605, the UE sends the PHR to the base station.

Step 606, the base station receives the PHR reported by the UE, sets up two PHR thresholds, and adopts the uplink channel configuration according to the PHR, including the uplink transmission mode reconfigured according to PHR.

The base station adopts the uplink channel configuration according to the PHR is that, the higher the level is, the more of the allocated physical resources are, the greater the transmitting power of the UE is. Therefore, the base station decides the MCS and resource allocation of the next uplink data scheduling according to the PHR reported by the UE, in order to avoid the limited transmit power problem imposed on the UE.

The base station has two ways to reconfigure the uplink transmission mode according to the PHR. One is that the base station sets up a PHR threshold PHR_thr, according to a relationship between the PHR the UE reported and the threshold PHR_thr to configure uplink transmission mode; the other is the base station sets up two PHR thresholds namely PHR_thr1 and PHR_thr2, PHR_thr1<PHR_thr2, according to the relationship between the PHR the UE reported and the threshold PHR_thr1 or PHR_thr2 to configure uplink transmission mode.

In embodiments of the present invention, the base station uses the second way according to PHR to reconfigure the uplink transmission mode as an example for illustration.

Especially, the base station adopting the second way includes the following steps according to PHR to reconfigure the uplink transmission mode:

(1) The base station sets up the PHR threshold PHR_thr1 and PHR_thr2, the setting of PHR_thr1 and PHR_thr2 is achieved according to the simulation results or the actual test.
(2) The base station reconfigures the uplink transmission mode according to the relationship of the PHR the UE reported and the thresholds PHR_thr1 and PHR_thr2.

When the PHR the UE reported is greater than the threshold PHR_thr2, the base station arranges the second configuration uplink transmission mode for the UE;

When the PHR the UE reported is less than the threshold PHR_thr1, the base station arranges the first configuration uplink transmission mode for the UE.

The above judgment indicates that, when the PHR the UE reported is greater than the threshold PHR_thr2, the transmission power of PUSCH is less than the PHR, then the base station arranges the second UE configuration uplink transmission mode for the UE; when the PHR the UE reported is less than the threshold PHR_thr1, the transmission power of PUSCH and the PHR are both greater, then the base station arranges the first uplink transmission mode for the UE. Besides, due to the two PHR thresholds, frequent switching between the two uplink transmission modes by the UE can be prevented.

The PHR reported by the UE may be an instantaneous PHR in the sub-frame i, also may be the result after a smoothing operation on the reported PHR for a period of time.

Step 607, the base station determines whether the reconfigured uplink transmission mode of the UE is the same as its current transmission mode of the UE.

When the judgment result is the same, the base station will not send the configured uplink transmission mode to the UE by signaling, and turn to step 606.

When the judgment result is different, the base station will send the configured uplink transmission mode to the UE by signaling, the UE switches to the uplink transmission mode configured by the base station, and turns to step 602.

The two processes are in a complementary relationship between the above uplink transmission mode configuration and the calculation of PHR. When the base station configures uplink transmission mode, then UE calculates the PHR according to the uplink transmission mode. When UE finishes calculation of PHR, the base station configures transmission mode according to the obtained PHR. When the UE accesses for the first time, the base station configures uplink transmission mode for the UE. Preferably, the base station configures the first uplink transmission mode for the UE.

In embodiments of the present invention, the uplink transmission mode is configured according to transmitting power headroom by the base station, but which is not limited to this. Whatever can indicate the channel quality parameters as good or bad may be used to configure the uplink transmission mode. Furthermore, the base station can not only configure uplink transmission mode, but also do other channel configuration according to the channel quality parameters.

Embodiments of the present invention further provide a system for an uplink channel configuration, comprising:

a network side device, which is used for configuring an uplink transmission mode of a UE, wherein the uplink transmission mode is an uplink transmission mode with the single carrier characteristics or with the multi-carrier carrier characteristics, wherein when the uplink transmission mode to be configured is different from its current transmission mode of the UE, the network side device transmits information about the uplink transmission mode to a UE; receiving the channel quality information (CQI) reported by the UE, and configuring the uplink channel accordingly; and

the UE, which is configured for receiving information about uplink transmission mode sent by the network side device, and adopting the uplink transmission mode; obtaining channel quality information according to the uplink transmission mode; and reporting the channel quality information obtained to the network side device, such that the network side device configures the uplink channel accordingly.

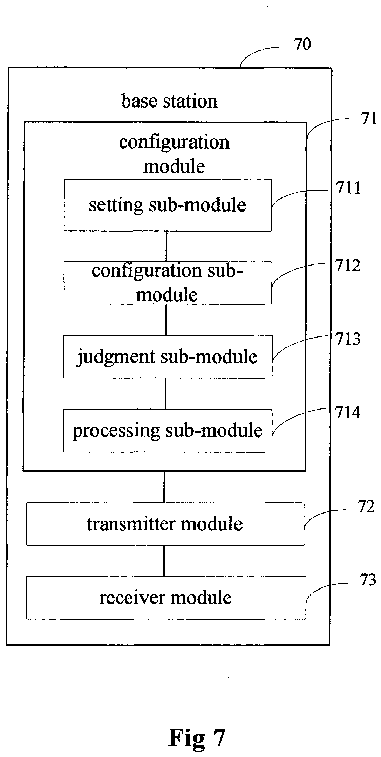

Embodiments of the present invention further provide a network side device, for example a base station 70, as shown in Fig. 7, comprising:

a configuring module 71, which is used for configuring an uplink transmission mode of a UE, and configuring the uplink channel according to the channel quality information, wherein the uplink transmission mode is an uplink transmission mode with the single carrier characteristics or another uplink transmission mode with the multi-carrier carrier characteristics;

a transmitting module 72, which is used for transmitting information about the uplink transmission mode to the UE when the uplink transmission mode to be configured is different from UE's current uplink transmission mode, as well as enabling the UE to adopt the uplink transmission mode, and obtaining the channel quality information (CQI) accordingly, and reporting the CQI obtained to the network side device; and

a receiving module 73, which is used for receiving the CQI reported by the UE, and transmitting the CQI to the configuring module 71.

The configuring module 71 is specifically used for configuring the uplink transmission mode with the single carrier characteristics for the UE, or the base station configures the uplink transmission mode with the multi-carrier characteristics for the UE.

On one hand, the uplink transmission mode with the single carrier characteristics is that the uplink transmission of the UE in a sub-frame is Physical Uplink Shared Channel (PUSCH) transmission only, or Physical Uplink Control Channel (PUCCH) transmission only.

On the other hand, the uplink transmission mode with the multi-carrier characteristics is that the uplink transmission of the UE in a sub-frame is anyone of PUSCH or PUCCH transmission, or both of PUSCH and PUCCH.

Before the configuring module 71 configures the uplink transmission mode of the UE, the method further includes:

receiving, by the base station, the channel quality information reported by the UE; or
completing, by the base station, the UE initial access procedure.

In addition, the configuring module 71 includes:

a setting sub-module 711, which is used for setting one or more transmitting power headroom thresholds;

a configuring sub-module 712, which is used for configuring an uplink transmission mode according to a relationship between the reported transmitting PHR of the UE and the transmitting PHR thresholds set up by the setting sub-module 711;

a judging sub-module 713, which is used for determining whether the uplink transmission mode configured by the configuring sub-module 712 is the same as its current uplink transmission mode of the UE; and

a processing sub-module 714, which is used for processing according to a judging result made by the judging sub-module 713.

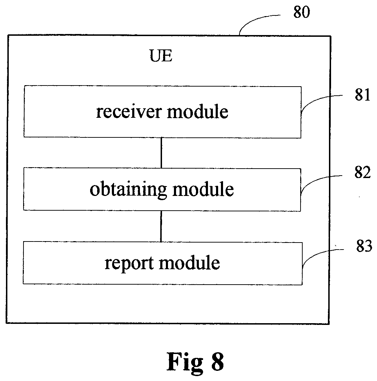

Embodiments of the present invention provide a User Equipment UE 80, as shown in Fig. 8, comprising:

a receiving module 81, which is used for receiving information about uplink transmission mode sent by a base station, and adopting the uplink transmission mode, wherein the uplink transmission mode is a transmission mode with the single carrier characteristics or with the multi-carrier characteristics;

an obtaining module 82, which is used for obtaining CQI according to the uplink transmission mode received by the receiving module 81; and

a reporting module 83, which is used for reporting the CQI obtained by the obtaining module 82 to the base station, such that the base station configures the uplink channel accordingly.

Specifically, the obtaining module 82 is configured for:

when the uplink transmission mode is a transmission mode with the single carrier characteristics, the UE calculates the transmitting PHR through a formula $PH(i) = P_{CMAX} - P_{PUSCH}(i)$, where $P_{CMAX}$ is the maximum transmission power allowed of the UE, $P_{PUSCH}(i)$ is the transmission power of PUSCH in the sub-frame i, and PH(i) is the transmitting PHR for the sub-frame i; and

when the uplink transmission mode is another transmission mode with the multi-carrier characteristics, the UE calculates the transmitting PHR through another formula $PH(i) = P_{CMAX} - P_{PUSCH}(i) - P_{PUCCH}(i)$, where $P_{CMAX}$ is the maximum transmission power allowed of the UE, $P_{PUSCH}$ (i) is the transmission power of PUSCH in the sub-frame i, $P_{PUCCH}$ is the transmission power of PUCCH in the sub-frame i, and PH (i) is the transmitting PHR for the sub-frame i.

Embodiments of the present invention are directed for power control according to different uplink transmission modes, thus realize the uplink channel configuration for the multi-carrier transmission in the LTE-Advanced system. Of course, any products embodied according to the embodiments of the present invention do not necessarily achieve all of the above advantages at the same time.

Through the description of the embodiments above, the technical personnel in this field can understand clearly that the present invention can be implemented by software and necessary current hardware platform. Of course can also through the hardware, but in many cases the former is better implementation ways. Based on this understanding, the technical program of the present invention or the part of contributing to the existing technology can be embodied by a form of software products which can be stored in storage medium, including a number of instructions for making a UE device (such as mobile phones, personal computers, servers, or network equipments, etc.) implement the methods described in the embodiments of the present invention.

## Claims

1.  An uplink channel configuration method, comprising:

    configuring (S401), by a network side device (70), an uplink transmission mode of a user equipment, UE (80), wherein the uplink transmission mode is with single carrier characteristics or with multi-carrier characteristics;
    transmitting (S402), by the network side device (70), when the uplink transmission mode to be configured is different from its current uplink transmission mode of the UE (80), information about the uplink transmission mode to be configured to the UE (80), causing the UE (80) to adopt the uplink transmission mode for uplink transmission, and obtaining channel quality information, CQI, accordingly, and reporting the CQI to the network side device (70);
    receiving (S403), by the network side device (70), the CQI reported by the UE (80); and
    scheduling (S404), by the network side device (70), the uplink channel according to the CQI received,
    wherein the uplink transmission mode with the single carrier characteristics is that the uplink transmission of the UE (80) in a sub-frame is Physical Uplink Shared Channel, PUSCH, transmission only, or Physical Uplink Control Channel, PUCCH, transmission only; and
    the uplink transmission mode with the multi-carrier characteristics is that the uplink transmission of the UE (80) in a sub-frame is anyone of the PUSCH transmission and PUCCH transmission, or both of PUSCH and PUCCH transmission,
    **characterized in that** the CQI is transmitting power headroom, PHR,
    when the uplink transmission mode is a transmission mode with the single carrier characteristics, the UE (80) calculates the transmitting PHR through a formula $PH$ (i) = $P_{CMAX}$ - $P_{PUSCH}$(i), where $P_{CMAX}$ is the allowed maximum transmission power of the UE (80), $P_{PUSCH}$ (i) is the transmission power of PUSCH in the sub-frame i, and PH(i) is the transmitting PHR for the sub-frame i; and
    when the uplink transmission mode is another transmission mode with the multi-carrier characteristics, the UE (80) calculates the transmitting PHR through another formula $PH$ (i) = $P_{CMAX}$ - $P_{PUSCH}$ (i) - - $P_{PUCCH}$ (i), where $P_{CMAX}$ is the allowed maximum transmission power of the UE (80), $P_{PUSCH}$ (i) is the transmission power of PUSCH in the sub-frame i, $P_{PUCCH}$ is the transmission power of PUCCH in the sub-frame i, and PH (i) is the transmitting PHR for the sub-frame i.

2.  The method according to claim 1, wherein the configuring, by the network side device (70), an uplink transmission mode of a UE (80) comprises:

    configuring, by the network side device (70), the uplink transmission mode of the UE (80) according to the CQI reported by the UE (80); or
    configuring, by the network side device (70), a default uplink transmission mode of the UE (80) after a UE initial access procedure.

3.  The method according to claim 1, wherein the scheduling, by the network side device (70), the uplink channel according to the CQI received comprises:

configuring, by the network side device (70), the uplink transmission mode according to a relationship between the reported transmitting power headroom of the UE (80) and the transmitting power headroom thresholds;

judging, by the network side device (70), whether the uplink transmission mode to be configured is the same as a current uplink transmission mode used by the UE (80); and

processing, by the network side device (70), according to a judging result, wherein when the judging result is different, the network side device notifies the UE (80) of the configured uplink transmission mode.

4. The method according to claim 3, wherein the configuring, by the network side device (70), the uplink transmission mode according to a relationship between the reported transmitting PHR of the UE (80) and the transmitting PHR thresholds comprises:

configuring, by the network side device (70), the uplink transmission mode of the UE (80) as the uplink transmission mode with the multi-carrier carrier characteristics, in case that the reported transmitting power headroom of the UE (80) is greater than the transmitting power headroom thresholds; otherwise, configuring, by the network side device (70), the uplink transmission mode of the UE (80) as the uplink transmission mode with the single carrier characteristics; or

configuring, by the network side device (70), the uplink transmission mode of the UE (80) as the uplink transmission mode with the single carrier characteristics, in case that the reported transmitting power headroom of the UE (80) is less than a first transmitting power threshold; configuring, by the network side device (70), the uplink transmission mode of the UE (80) as the uplink transmission mode with the multi-carrier carrier characteristics, in case that the reported transmitting power headroom of the UE (80) is greater than a second transmitting power threshold, wherein the first transmitting power threshold is less than the second transmitting power threshold.

5. An uplink channel configuration method, comprising:

receiving (S503, S603), by a UE (80), information about uplink transmission mode sent by a network side device (70), and adopting the uplink transmission mode;

obtaining (S504, S604), by the UE (80), channel quality information, CQI, according to the uplink transmission mode received; and

reporting (S505, S605), by the UE (80), the obtained CQI to the network side device (70), such that the network side device (70) configures the uplink channel according to the obtained CQI, wherein the uplink transmission mode is a transmission mode with the single carrier characteristics or with the multi-carrier characteristics,

wherein the uplink transmission mode with the single carrier characteristics is that the uplink transmission of the UE (80) in a sub-frame is Physical Uplink Shared Channel, PUSCH, transmission only, or Physical Uplink Control Channel, PUCCH, transmission only; and

the uplink transmission mode with the multi-carrier characteristics is that the uplink transmission of the UE (80) in a sub-frame is anyone of the PUSCH transmission and PUCCH transmission, or both of PUSCH and PUCCH transmission,

the method is **characterized in that** the CQI is transmitting power headroom, PHR,

when the uplink transmission mode is a transmission mode with the single carrier characteristics, the UE (80) calculates the transmitting PHR through a formula $PH(i) = P_{CMAX} - P_{PUSCH}(i)$, where $P_{CMAX}$ is the allowed maximum transmission power of the UE (80), $P_{PUSCH}(i)$ is the transmission power of PUSCH in the sub-frame i, and PH(i) is the transmitting PHR for the sub-frame i; and

when the uplink transmission mode is another transmission mode with the multi-carrier characteristics, the UE (80) calculates the transmitting PHR through another formula $PH(i) = P_{CMAX} - P_{PUSCH}(i) - P_{PUCCH}(i)$, where $P_{CMAX}$ is the allowed maximum transmission power of the UE (80), $P_{PUSCH}(i)$ is the transmission power of PUSCH in the sub-frame i, $P_{PUCCH}$ is the transmission power of PUCCH in the sub-frame i, and PH(i) is the transmitting PHR for the sub-frame i.

6. A network side device (70), comprising:

a configuring module (71), which is adapted to configure an uplink transmission mode of a UE (80), and to configure the uplink channel according to the channel quality information, CQI, wherein the uplink transmission mode is an uplink transmission mode with the single carrier characteristics or another uplink transmission mode with the multi-carrier carrier characteristics;

a transmitting module (72), which is adapted to transmit information about the uplink transmission mode to the UE (80) when the uplink transmission mode to be configured is different from UE's current uplink transmission mode, wherein said transmitting module (72) is further adapted to enable the UE (80) to adopt the uplink transmission mode, and it is adapted to obtain the CQI accordingly, and to report the CQI obtained to the network side device (70); and

a receiving module (73), which is adapted to receive the CQI reported by the UE (80), and to transmit the CQI to the configuring module (71),

wherein the uplink transmission mode with the single carrier characteristics is that the uplink transmission of the UE (80) in a sub-frame is Physical Uplink Shared Channel, PUSCH, transmission only, or Physical Uplink Control Channel, PUCCH, transmission only; and

the uplink transmission mode with the multi-carrier characteristics is that the uplink transmission of the UE (80) in a sub-frame is anyone of the PUSCH transmission and PUCCH transmission, or both of PUSCH and PUCCH transmission,

the network side device (70) is **characterized in that** the CQI is transmitting power headroom, PHR,

when the uplink transmission mode is a transmission mode with the single carrier characteristics, the UE (80) calculates the transmitting PHR through a formula $PH(i) = P_{CMAX} - P_{PUSCH}(i)$, where $P_{CMAX}$ is the allowed maximum transmission power of the UE (80), $P_{PUSCH}(i)$ is the transmission power of PUSCH in the sub-frame i, and PH(i) is the transmitting PHR for the sub-frame i; and

when the uplink transmission mode is another transmission mode with the multi-carrier characteristics, the UE (80) calculates the transmitting PHR through another formula $PH(i) = P_{CMAX} - P_{PUSCH}(i) - P_{PUCCH}(i)$, where $P_{CMAX}$ is the allowed maximum transmission power of the UE (80), $P_{PUSCH}(i)$ is the transmission power of PUSCH in the sub-frame i, $P_{PUCCH}$ is the transmission power of PUCCH in the sub-frame i, and PH (i) is the transmitting PHR for the sub-frame i.

7. The network side device (70) according to claim 6, wherein the configuring module (71) comprises:

a setting sub-module (711), which is adapted to set one or more transmitting power headroom thresholds;
a configuring sub-module (712), which is adapted to configure an uplink transmission mode according to a relationship between the reported transmitting PHR of the UE (80) and the transmitting PHR thresholds;
a judging sub-module (713), which is adapted to determine whether the uplink transmission mode configured by the configuring sub-module (712) is the same as its current uplink transmission mode of the UE (80); and
a processing sub-module (714), which is adapted to process according to a judging result made by the judging sub-module (713).

8. A user equipment, UE (80), comprising:

a receiving module (81), which is adapted to receive information about uplink transmission mode sent by a network side device (70), and to adopt the uplink transmission mode, wherein the uplink transmission mode is a transmission mode with the single carrier characteristics or with the multi-carrier characteristics;
an obtaining module (82), which is adapted to obtain channel quality information, CQI, according to the uplink transmission mode received by the receiving module (81); and
a reporting module (83), which is adapted to report the CQI obtained by the obtaining module (82) to the network side device (70), such that the network side device (70) configures the uplink channel accordingly,
wherein the uplink transmission mode with the single carrier characteristics is that the uplink transmission of the UE (80) in a sub-frame is Physical Uplink Shared Channel, PUSCH, transmission only, or Physical Uplink Control Channel, PUCCH, transmission only; and
the uplink transmission mode with the multi-carrier characteristics is that the uplink transmission of the UE (80) in a sub-frame is anyone of the PUSCH transmission and PUCCH transmission, or both of PUSCH and PUCCH transmission,
the UE (80) is **characterized in that** the CQI is transmitting power headroom, PHR,
when the uplink transmission mode is a transmission mode with the single carrier characteristics, the UE (80) calculates the transmitting PHR through a formula $PH(i) = P_{CMAX} - P_{PUSCH}(i)$, where $P_{CMAX}$ is the allowed maximum transmission power of the UE (80), $P_{PUSCH}(i)$ is the transmission power of PUSCH in the sub-frame i, and PH(i) is the transmitting PHR for the sub-frame i; and
when the uplink transmission mode is another transmission mode with the multi-carrier characteristics, the UE (80) calculates the transmitting PHR through another formula $PH(i) = P_{CMAX} - P_{PUSCH}(i) - P_{PUCCH}(i)$, where $P_{CMAX}$ is the allowed maximum transmission power of the UE (80), $P_{PUSCH}(i)$ is the transmission power of PUSCH in the sub-frame i, $P_{PUCCH}$ is the transmission power of PUCCH in the sub-frame i, and PH (i) is the transmitting PHR for the sub-frame i.

**Patentansprüche**

1. Konfigurationsverfahren für einen Uplink-Kanal, umfassend:

   Konfigurieren (S401) durch eine netzwerkseitige Vorrichtung (70) eines Uplink-Übertragungsmodus eines Benutzergeräts, UE (80), wobei der Uplink-Übertragungsmodus Einzelträgereigenschaften oder Mehrträgereigenschaften aufweist;
   Senden (S402) durch die netzwerkseitige Vorrichtung (70), wenn sich der zu konfigurierende Uplink-Übertragungsmodus von seinem aktuellen Uplink-Übertragungsmodus des UE (80) unterscheidet, von Informationen über den auf das UE (80) zu konfigurierenden Uplink-Übertragungsmodus, wodurch das UE (80) veranlasst wird, den Uplink-Übertragungsmodus für die Uplink-Übertragung zu übernehmen und Kanalqualitätsinformationen, CQI entsprechend zu erhalten, und die CQI an die netzwerkseitige Vorrichtung (70) zu melden;
   Empfangen (S403) durch die netzwerkseitige Vorrichtung (70) der von dem UE (80) gemeldeten CQI; und
   Vorbereiten (S404) durch die netzwerkseitige Vorrichtung (70) des Uplink-Kanals gemäß den empfangenen CQI, wobei
   der Uplink-Übertragungsmodus mit den Einzelträgereigenschaften darin besteht, dass die Uplink-Übertragung des Benutzergerätes (80) in einem Unterrahmen ein physikalischer gemeinsamer Uplink-Kanal, PUSCH, nur Übertragung, oder ein physikalischer Uplink-Steuerkanal, PUCCH, nur Übertragung ist; und
   der Uplink-Übertragungsmodus mit den Mehrträgereigenschaften darin besteht, dass die Uplink-Übertragung des Benutzergerätes, UE (80) in einem Unterrahmen eine der PUSCH- oder PUCCH-Übertragungen oder sowohl die PUSCH- als auch die PUCCH-Übertragung ist,
   **dadurch gekennzeichnet, dass** die CQI Leistungs-Headroom, PHR, überträgt,
   wenn der Uplink-Übertragungsmodus ein Übertragungsmodus mit den Einzelträgereigenschaften ist, das UE (80) die Übertragungs-PHR durch eine Formel $PH(i) - P_{CMAX} - P_{PUSCH}(i)$ berechnet, wobei $P_{CMAX}$ die zulässige maximale Sendeleistung des UE (80) ist, $P_{PUSCH}(i)$ die Sendeleistung von PUSCH in dem Unterrahmen i ist und die PH(i) die Übertragungs-PHR für den Unterrahmen i ist; und
   wenn der Uplink-Übertragungsmodus ein anderer Übertragungsmodus mit den Mehrträgereigenschaften ist, das UE (80) die Übertragungs-PHR durch eine andere Formel $PH(i) = P_{CMAX} - P_{PUSCH}(i) - P_{PUCCH}(i)$ berechnet, wobei $P_{CMAX}$ die zulässige maximale Übertragungsleistung des UE (80) ist, $P_{PUSCH}(i)$ die Sendeleistung von PUSCH für den Unterrahmen i ist, $P_{PUCCH}$ die Sendeleistung von PUCCH für den Unterrahmen i ist und PH(i) die Übertragungs-PHR für den Unterrahmen i ist.

2. Verfahren nach Anspruch 1, wobei das Konfigurieren eines Uplink-Übertragungsmodus eines UE (80) durch die netzwerkseitige Vorrichtung (70) umfasst:

   Konfigurieren des Uplink-Übertragungsmodus des UE (80) durch die netzwerkseitige Vorrichtung (70) gemäß den von dem UE (80) gemeldeten CQI; oder
   Konfigurieren eines Standard-Uplink-Übertragungsmodus des UE (80) durch die netzwerkseitige Vorrichtung (70) nach einem UE-Erstzugriffsverfahren.

3. Verfahren nach Anspruch 1, wobei das Vorbereiten des Uplink-Kanals gemäß den empfangenen CQI durch die netzwerkseitige Vorrichtung (70) umfasst:

   Konfigurieren des Uplink-Übertragungsmodus durch die netzwerkseitige Vorrichtung (70) gemäß einer Beziehung zwischen dem gemeldeten Sendeleistungs-Headroom des UE (80) und den Sendeleistungs-Headroom-Schwellenwerten;
   Beurteilen durch die netzwerkseitige Vorrichtung (70), ob der zu konfigurierende Uplink-Übertragungsmodus der gleiche wie ein aktueller Uplink-Übertragungsmodus ist, der von dem UE (80) verwendet wird; und
   Verarbeitung durch die netzwerkseitige Vorrichtung (70) gemäß einem Beurteilungsergebnis, wobei, wenn das Beurteilungsergebnis unterschiedlich ist, die netzwerkseitige Vorrichtung das UE (80) über den konfigurierten Uplink-Übertragungsmodus benachrichtigt.

4. Verfahren nach Anspruch 3, wobei das Konfigurieren des Uplink-Übertragungsmodus durch eine netzwerkseitige Vorrichtung (70) gemäß einer Beziehung zwischen dem gemeldeten Übertragungs-PHR des UE (80) und den Übertragungs-PHR-Schwellenwerten umfasst:

   Konfigurieren des Uplink-Übertragungsmodus des UE (80) durch die netzwerkseitige Vorrichtung (70) als Uplink-Übertragungsmodus mit den Mehrträgereigenschaften für den Fall, dass der gemeldete Sendeleistungs-Headroom des UE (80) größer als die Sendeleistungs-Headroom-Schwellenwerte ist; andernfalls, Konfigurieren des Uplink-Übertragungsmodus des UE (80) durch die netzwerkseitige Vorrichtung (70) als Uplink-Übertragungsmodus mit den Einzelträgereigenschaften; oder

Konfigurieren des Uplink-Übertragungsmodus des UE (80) durch die netzwerkseitige Vorrichtung (70) als Uplink-Übertragungsmodus mit den Einzelträgereigenschaften für den Fall, dass der gemeldete Sendeleistungs-Headroom des UE (80) kleiner als ein erster Sendeleistungs-Headroom-Schwellenwert ist;

Konfigurieren des Uplink-Übertragungsmodus des UE (80) durch die netzwerkseitige Vorrichtung (70) als Uplink-Übertragungsmodus mit den Mehrträgerträgereigenschaften für den Fall, dass der gemeldete Sendeleistungs-Headroom des UE (80) größer als eine zweite Sendeleistungsschwelle ist, wobei die erste Sendeleistungsschwelle kleiner als die zweite Sendeleistungsschwelle ist.

5. Uplink-Kanal-Konfigurationsverfahren, umfassend:

Empfangen (S503, S603) durch ein UE (80) von Informationen über den von einer netzwerkseitigen Vorrichtung (70) gesendeten Uplink-Übertragungsmodus und Übernehmen des Uplink-Übertragungsmodus durch ein UE (80);

Erhalten (S504, S604) durch das UE (80) von Kanalqualitätsinformationen CQI gemäß dem empfangenen Uplink-Übertragungsmodus; und

Melden (S505, S605) durch das UE (80) der erhaltenen CQI an die netzwerkseitige Vorrichtung (70), so dass die netzwerkseitige Vorrichtung (70) den Uplink-Kanal gemäß den erhaltenen CQI konfiguriert, wobei der Uplink-Übertragungsmodus ein Übertragungsmodus mit den Einzelträgereigenschaften oder mit den Mehrträgereigenschaften ist,

wobei der Uplink-Übertragungsmodus mit den Einzelträgereigenschaften darin besteht, dass die Uplink-Übertragung des UE (80) in einem Unterrahmen ein physikalischer gemeinsamer Uplink-Kanal, PUSCH, nur Übertragung, oder ein physikalischer Uplink-Steuerkanal, PUCCH, nur Übertragung ist; und

wobei der Uplink-Übertragungsmodus mit den Mehrträgereigenschaften darin besteht, dass die Uplink-Übertragung des UE (80) in einem Unterrahmen eine der PUSCH- oder der PUCCH-Übertragungen ist, oder sowohl die PUSCH als auch die PUCCH-Übertragung ist,

wobei das Verfahren **dadurch gekennzeichnet ist, dass** die CQI Leistungs-Headroom, PHR, überträgt, wobei wenn der Uplink-Übertragungsmodus ein Übertragungsmodus mit den Einzelträgereigenschaften ist, berechnet das UE (80) die Übertragungs-PHR durch eine Formel $PH(i) - P_{CMAX} - P_{PUSCH}(i)$, wobei $P_{CMAX}$ die zulässige maximale Übertragungsleistung des UE (80) ist, $P_{PUSCH}(i)$ die Übertragungsleistung von PUSCH in dem Unterrahmen i ist, und $PH(i)$ die Übertragungs-PHR für den Unterrahmen i ist; und

wenn der Uplink-Übertragungsmodus ein anderer Übertragungsmodus mit den Mehrträgereigenschaften ist, das UE (80) die Übertragungs-PHR durch eine andere Formel $PH(i) = P_{CMAX} - P_{USCH}(i) - P_{PUCCH}(i)$ berechnet, wobei $P_{CMAX}$ die zulässige maximale Übertragungsleistung des UE (80) ist, $P_{PUSCH}(i)$ die Sendeleistung von PUSCH in dem Unterrahmen i ist, $P_{PUCCH}$ die Sendeleistung von PUCCH in dem Unterrahmen i ist, und $PH(i)$ die Übertragungs-PHR für den Unterrahmen i ist.

6. Netzwerkseitige Vorrichtung (70), umfassend:

ein Konfigurationsmodul (71), das geeignet ist, einen Uplink-Übertragungsmodus eines UE (80) zu konfigurieren und den Uplink-Kanal gemäß der Kanalqualitätsinformation CQI zu konfigurieren, wobei der Uplink-Übertragungsmodus ein Uplink-Übertragungsmodus mit den Einzelträgereigenschaften ist, oder ein anderer Uplink-Übertragungsmodus mit den Mehrträgerträgereigenschaften ist;

ein Sendemodul (72), das geeignet ist, Informationen über den Uplink-Übertragungsmodus an das UE (80) zu übertragen, wenn sich der zu konfigurierende Uplink-Übertragungsmodus von dem aktuellen Uplink-Übertragungsmodus des UE unterscheidet, wobei das Sendemodul (72) weiter entfernt angepasst ist, um es dem UE (80) zu ermöglichen, den Uplink-Übertragungsmodus anzunehmen, und es angepasst ist, um den CQI entsprechend zu erhalten und den erhaltenen CQI an die netzwerkseitige Vorrichtung (70) zu melden; und

ein Empfangsmodul (73), das angepasst ist, um die vom UE (80) gemeldeten CQI zu empfangen und die CQI an das Konfigurationsmodul (71) zu senden;

wobei der Uplink-Übertragungsmodus mit den Einzelträgereigenschaften darin besteht, dass die Aufwärtsverbindungsübertragung des UE (80) in einem Unterrahmen ein physikalischer gemeinsamer Uplink-Kanal, PUSCH, nur Übertragung, oder ein physikalischer Uplink-Steuerkanal, PUCCH, nur Übertragung ist; und

wobei der Uplink-Übertragungsmodus mit den Mehrträgereigenschaften darin besteht, dass die Uplink-Übertragung des UE (80) in einem Unterrahmen eine der PUSCH- oder PUCCH-Übertragungen ist, oder sowohl die PUSCH- als auch die PUCCH-Übertragung ist,

wobei die netzwerkseitige Vorrichtung (70) **dadurch gekennzeichnet ist, dass** der CQI Leistungs-Headroom, PHR, überträgt,

wenn der Uplink-Übertragungsmodus ein Übertragungsmodus mit den Einzelträgereigenschaften ist, berechnet das UE (80) die Übertragungs-PHR durch eine Formel $PH(i) - P_{CMAX} - P_{PUSCH}(i)$, wobei $P_{CMAX}$ die zulässige maximale Übertragungsleistung des UE (80) ist, $P_{PUSCH}(i)$ die Übertragungsleistung von PUSCH in dem Unterrahmen i ist, und PH (i) die Übertragungs-PHR für den Unterrahmen i ist; und

wenn der Uplink-Übertragungsmodus ein anderer Übertragungsmodus mit den Mehrträgereigenschaften ist, das UE (80) die Übertragungs-PHR durch eine andere Formel $PH(i) = P_{CMAX} - P_{USCH}(i) - P_{PUCCH}(i)$ berechnet, wobei $P_{CMAX}$ die zulässige maximale Übertragungsleistung des UE (80) ist, $P_{PUSCH}(i)$ die Sendeleistung von PUSCH in dem Unterrahmen i ist, PPUCCH die Sendeleistung von PUCCH in dem Unterrahmen i ist und PH (i) die Übertragungs-PHR für den Unterrahmen i ist.

7. Netzwerkseitige Vorrichtung (70) nach Anspruch 6, wobei das Konfigurationsmodul (71) umfasst:

ein Einstell-Untermodul (711), das angepasst ist, um einen oder mehrere Sendeleistungs-Headroom-Schwellenwerte festzulegen;

ein konfigurierendes Untermodul (712), das angepasst ist, um einen Uplink-Übertragungsmodus gemäß einer Beziehung zwischen dem gemeldeten Übertragungs-PHR des UE (80) und den Übertragungs-PHR-Schwellenwerten zu konfigurieren;

ein Beurteilungs-Untermodul (713), das angepasst ist, um zu bestimmen, ob der durch das konfigurierende Untermodul (712) konfigurierte Uplink-Übertragungsmodus der gleiche ist wie sein aktueller Uplink-Übertragungsmodus des UE (80); und

ein Verarbeitungs-Untermodul (714), das angepasst ist, um gemäß einem vom Beurteilungs-Untermodul (713) erzielten Beurteilungsergebnis zu verarbeiten.

8. Benutzerausrüstung, UE (80), umfassend:

ein Empfangsmodul (81), das angepasst ist, um Informationen über den von einer netzwerkseitigen Vorrichtung (70) gesendeten Uplink-Übertragungsmodus zu empfangen und den Uplink-Übertragungsmodus zu übernehmen, wobei der Uplink-Übertragungsmodus ein Übertragungsmodus mit den Einzelträgereigenschaften oder mit den Mehrträgereigenschaften ist;

ein Erhaltungsmodul (82), das geeignet ist, um Kanalqualitätsinformationen CQI gemäß dem vom Empfangsmodul (81) empfangenen Uplink-Übertragungsmodus zu erhalten; und

ein Berichtsmodul (83), das angepasst ist, um die von dem Erhaltungsmodul (82) erhaltenen CQI an die netzwerkseitige Vorrichtung (70) zu melden, so dass die netzwerkseitige Vorrichtung (70) den Uplink-Kanal entsprechend konfiguriert;

wobei der Uplink-Übertragungsmodus mit den Einzelträgereigenschaften darin besteht, dass die Uplink-Übertragung des UE (80) in einem Unterrahmen ein physikalischer gemeinsamer Uplink-Kanal, PUSCH, nur Übertragung, oder ein physikalischer Uplink-Steuerkanal, PUCCH, nur Übertragung ist; und

der Uplink-Übertragungsmodus mit den Mehrträgereigenschaften darin besteht, dass die Uplink-Übertragung des UE (80) in einem Unterrahmen eine der PUSCH- oder PUCCH-Übertragungen ist oder sowohl die PUSCH- als auch die PUCCH-Übertragung ist,

wobei das UE (80) **dadurch gekennzeichnet ist, dass** die CQI Leistungs-Headroom, PHR, überträgt,

wenn der Uplink-Übertragungsmodus ein Übertragungsmodus mit den Einzelträgereigenschaften ist, wobei das UE (80) die Übertragungs-PHR durch eine Formel $PH(i) = P_{CMAX} - P_{PUSCH}(i)$ berechnet, wobei $P_{CMAX}$ die zulässige maximale Übertragungsleistung des UE (80) ist, $P_{PUSCH}(i)$ die Sendeleistung von PUSCH in dem Unterrahmen i ist, und PH(i) die Übertragungs-PHR für den Unterrahmen i ist; und

wenn der Uplink-Übertragungsmodus ein anderer Übertragungsmodus mit den Mehrträgereigenschaften ist, das UE (80) die Übertragungs-PHR durch eine andere Formel $PH(i) = P_{CMAX} - P_{PUSCH}(i) - P_{PUCCH}(i)$ berechnet, wobei $P_{CMAX}$ die zulässige maximale Übertragungsleistung des UE (80) ist, $P_{PUSCH}(i)$ die Sendeleistung von PUSCH in dem Unterrahmen i ist, $P_{PUCCH}$ die Sendeleistung von PUCCH in dem Unterrahmen i ist, und PH (i) die Übertragungs-PHR für den Unterrahmen i ist.

**Revendications**

1. Méthode de configuration de canal de liaison montante, comprenant :

configurer (S401), par un dispositif côté réseau (70), un mode de transmission en liaison montante d'un équipement utilisateur, UE (80), dans laquelle le mode de transmission en liaison montante présente des caractéristiques à porteuse unique ou à porteuses multiples ;

transmettre (S402), par le dispositif côté réseau (70), lorsque le mode de transmission en liaison montante à configurer est différent de son mode de transmission en liaison montante de l'UE (80) actuel, des informations sur le mode de transmission en liaison montante à configurer à l'UE (80), en amenant l'UE (80) à adopter le mode de transmission en liaison montante pour une transmission en liaison montante, et à obtenir des informations de qualité de canal, CQI, en conséquence, et à rapporter les CQI au dispositif côté réseau (70) ;

recevoir (S403), par le dispositif côté réseau (70), les CQI rapportées par l'UE (80) ; et

planifier (S404), par le dispositif côté réseau (70), le canal de liaison montante selon les CQI reçues,

dans laquelle le mode de transmission en liaison montante avec les caractéristiques à porteuse unique est que la transmission en liaison montante de l'UE (80) dans une sous-trame est une transmission de canal physique partagé de liaison montante, PUSCH, uniquement, ou une transmission de canal physique de contrôle de liaison montante, PUCCH, uniquement ; et

le mode de transmission en liaison montante avec les caractéristiques à porteuses multiples est que la transmission en liaison montante de l'UE (80) dans une sous-trame est l'une quelconque des transmissions PUSCH ou PUCCH, ou les deux transmissions PUSCH et PUCCH,

**caractérisée en ce que** les CQI sont une marge de puissance de transmission, PHR,

lorsque le mode de transmission en liaison montante est un mode de transmission avec les caractéristiques à porteuse unique, l'UE (80) calcule la PHR de transmission à travers une formule $PH(i) = P_{CMAX} - P_{USCH}(i)$ , où $P_{CMAX}$ est la puissance de transmission maximale autorisée de l'UE (80), $P_{PUSCH}(i)$ est la puissance de transmission de PUSCH dans la sous-trame i, et PH(i) est la PHR de transmission pour la sous-trame i ; et

lorsque le mode de transmission en liaison montante est un autre mode de transmission avec les caractéristiques à porteuses multiples, l'UE (80) calcule la PHR de transmission à travers une autre formule $PH(i) - P_{CMAX} - P_{PUSCH}(i) - P_{PUCCH}(i)$, où $P_{CMAX}$ est la puissance de transmission maximale autorisée de l'UE (80), $P_{PUSCH}(i)$ est la puissance de transmission de PUSCH dans la sous-trame i, $P_{PUCCH}$ est la puissance de transmission de PUSCH dans la sous-trame i, et PH(i) est la PHR de transmission pour la sous-trame i.

2. Méthode selon la revendication 1, dans laquelle configurer, par le dispositif côté réseau (70), un mode de transmission en liaison montante d'un UE (80) comprend :

configurer, par le dispositif côté réseau (70), le mode de transmission en liaison montante de l'UE (80) selon les CQI rapportées par l'UE (80) ; ou

configurer, par le dispositif côté réseau (70), un mode de transmission en liaison montante par défaut de l'UE (80) après une procédure d'accès initial à l'UE.

3. Méthode selon la revendication 1, dans laquelle planifier, par le dispositif côté réseau (70), le canal de liaison montante selon les CQI reçues comprend :

configurer, par le dispositif côté réseau (70), le mode de transmission en liaison montante selon une relation entre la marge de puissance de transmission rapportée de l'UE (80) et les seuils de marge de puissance de transmission ;

évaluer, par le dispositif côté réseau (70), si le mode de transmission en liaison montante à configurer est le même qu'un mode de transmission en liaison montante actuel utilisé par l'UE (80) ; et

traiter, par le dispositif côté réseau (70), selon un résultat d'évaluation dans lequel lorsque le résultat d'évaluation est différent, le dispositif côté réseau notifie à l'UE (80) le mode de transmission en liaison montante configuré.

4. Méthode selon la revendication 3, dans laquelle configurer, par le dispositif côté réseau (70), le mode de transmission en liaison montante selon une relation entre la PHR de transmission rapportée de l'UE (80) et les seuils de PHR de transmission comprend :

configurer, par le dispositif côté réseau (70), le mode de transmission en liaison montante de l'UE (80) comme le mode de transmission en liaison montante avec les caractéristiques à porteuses multiples, dans le cas où la marge de puissance de transmission rapportée de l'UE (80) est supérieure aux seuils de marge de puissance de transmission ; autrement, configurer, par le dispositif côté réseau (70), le mode de transmission en liaison montante de l'UE (80) comme le mode de transmission en liaison montante avec les caractéristiques à porteuse unique ; ou

configurer,, par le dispositif côté réseau (70), le mode de transmission en liaison montante de l'UE (80) comme le mode de transmission en liaison montante avec les caractéristiques à porteuse unique, dans le cas où la marge de puissance de transmission rapportée de l'UE (80) est inférieure à un premier seuil de puissance de transmission ; configurer, par le dispositif côté réseau (70), le mode de transmission en liaison montante de l'UE (80) comme le mode de transmission en liaison montante avec les caractéristiques à porteuses multiples, dans le cas où la marge de puissance de transmission rapportée de l'UE (80) est supérieure à un deuxième seuil de puissance de transmission, dans laquelle le premier seuil de puissance de transmission est inférieur au deuxième seuil de puissance de transmission.

5. Méthode de configuration de canal de liaison montante, comprenant :

recevoir (S503, S603), par un UE (80), des informations sur le mode de transmission en liaison montante envoyées par un dispositif côté réseau (70), et adopter le mode de transmission en liaison montante ;

obtenir (S504, S604), par l'UE (80), des informations de qualité de canal, selon le mode de transmission en liaison montante reçu ; et

rapporter (S505, S605), par l'UE (80), les CQI obtenues au dispositif côté réseau (70), de façon que le dispositif côté réseau (70) configure le canal de liaison montante selon les CQI obtenues, dans laquelle le mode de transmission en liaison montante est un mode de transmission avec les caractéristiques à porteuse unique ou avec les caractéristiques à porteuses multiples,

dans laquelle le mode de transmission en liaison montante avec les caractéristiques à porteuse unique est que la transmission en liaison montante de l'UE (80) dans une sous-trame est une transmission de canal physique partagé de liaison montante, PUSCH, uniquement, ou une transmission de canal physique de contrôle de liaison montante, PUCCH, uniquement ; et

le mode de transmission en liaison montante avec les caractéristiques à porteuses multiples est que la transmission en liaison montante de l'UE (80) dans une sous-trame est l'une quelconque des transmissions PUSCH ou PUCCH, ou les deux transmissions PUSCH et PUCCH,

la méthode est **caractérisée en ce que** les CQI sont une marge de puissance de transmission, PHR,

lorsque le mode de transmission en liaison montante est un mode de transmission avec les caractéristiques à porteuse unique, l'UE (80) calcule la PHR de transmission à travers une formule $PH(i) = P_{CMAX} - P_{USCH}(i)$ , où $P_{CMAX}$ est la puissance de transmission maximale autorisée de l'UE (80), $P_{PUSCH}(i)$ est la puissance de transmission de PUSCH dans la sous-trame i, et PH(i) est la PHR de transmission pour la sous-trame i ; et

lorsque le mode de transmission en liaison montante est un autre mode de transmission avec les caractéristiques à porteuses multiples, l'UE (80) calcule la PHR de transmission à travers une autre formule $PH(i) = P_{CMAX} - P_{PUSCH}(i) - P_{PUCCH}(i)$, où $P_{CMAX}$ est la puissance de transmission maximale autorisée de l'UE (80), $P_{PUSCH}(i)$ est la puissance de transmission de PUSCH dans la sous-trame i, $P_{PUCCH}$ est la puissance de transmission de PUSCH dans la sous-trame i, et PH(i) est la PHR de transmission pour la sous-trame i.

6. Dispositif côté réseau (70) comprenant :

un module de configuration (71), qui est apte à configurer un mode de transmission en liaison montante d'un UE (80), et à configurer le canal de liaison montante selon les informations de qualité de canal, CQI, dans lequel le mode de transmission en liaison montante est un mode de transmission en liaison montante avec les caractéristiques à porteuse unique ou un autre mode de transmission en liaison montante avec les caractéristiques à porteuses multiples ;

un module de transmission (72), qui est apte à transmettre des informations sur le mode de transmission en liaison montante à l'UE (80) lorsque le mode de transmission en liaison montante à configurer est différent du mode de transmission en liaison montante actuel de l'UE, dans lequel ledit module de transmission (72) est en outre apte à permettre à l'UE (80) d'obtenir les CQI en conséquence, et rapporter les CQI obtenues au dispositif côté réseau (70) ; et

un module de réception (73), qui est apte à recevoir les CQI rapportées par l'UE (80), et à transmettre les CQI au module de configuration (71),

dans lequel le mode de transmission en liaison montante avec les caractéristiques à porteuse unique est que la transmission en liaison montante de l'UE (80) dans une sous-trame est une transmission de canal physique partagé de liaison montante, PUSCH, uniquement, ou une transmission de canal physique de contrôle de liaison montante, PUCCH, uniquement ; et

le mode de transmission en liaison montante avec les caractéristiques à porteuses multiples est que la transmission en liaison montante de l'UE (80) dans une sous-trame est l'une quelconque des transmissions PUSCH ou PUCCH, ou les deux transmissions PUSCH et PUCCH,

le dispositif côté réseau (70) est **caractérisé en ce que** les CQI sont une marge de puissance de transmission, PHR,

lorsque le mode de transmission en liaison montante est un mode de transmission avec les caractéristiques à porteuse unique, l'UE (80) calcule la PHR de transmission à travers une formule $PH(i) = P_{CMAX} - P_{USCH}(i)$, où $P_{CMAX}$ est la puissance de transmission maximale autorisée de l'UE (80), $P_{PUSCH}(i)$ est la puissance de transmission de PUSCH dans la sous-trame i, et PH(i) est la PHR de transmission pour la sous-trame i ; et lorsque le mode de transmission en liaison montante est un autre mode de transmission avec les caractéristiques à porteuses multiples, l'UE (80) calcule la PHR de transmission à travers une autre formule $PH(i) = P_{CMAX} - P_{PUSCH}(i) - P_{PUCCH}(i)$, où $P_{CMAX}$ est la puissance de transmission maximale autorisée de l'UE (80), $P_{PUSCH}(i)$ est la puissance de transmission de PUSCH dans la sous-trame i, $P_{PUCCH}$ est la puissance de transmission de PUCCH dans la sous-trame i, et PH(i) est la PHR de transmission pour la sous-trame i.

7. Dispositif côté réseau (70) selon la revendication 6, dans lequel le module de configuration (71) comprend :

un sous-module de réglage (711), qui est apte à fixer un ou plusieurs seuils de marge de puissance de transmission ;
un sous-module de configuration (712), qui est apte à configurer un mode de transmission en liaison montante selon une relation entre la PHR de transmission rapportée de l'UE (80) et les seuils de PHR de transmission ;
un sous-module d'évaluation (713), qui est apte à déterminer si le mode de transmission en liaison montante configuré par le sous-module de configuration (712) est le même que le mode de transmission en liaison montante actuel de l'UE (80) ; et
un sous-module de traitement (714), qui est apte à traiter selon un résultat d'évaluation réalisé par le sous-module d'évaluation (713).

8. Équipement utilisateur, UE (80) comprenant :

un module de réception (81), qui est apte à recevoir des informations sur le mode de transmission en liaison montante envoyées par un dispositif côté réseau (70), et à adopter le mode de transmission en liaison montante, dans lequel le mode de transmission en liaison montante est un mode de transmission avec les caractéristiques à porteuse unique ou avec les caractéristiques à porteuses multiples ;
un module d'obtention (82), qui est apte à obtenir des informations de qualité de canal, CQI, selon le mode de transmission en liaison montante reçu par le module de réception (81) ; et
un module de rapport (83), qui est apte à rapporter les CQI obtenues par le module d'obtention (82) au dispositif côté réseau (70), de façon que le dispositif côté réseau (70) configure le canal de liaison montante en conséquence,
dans lequel le mode de transmission en liaison montante avec les caractéristiques à porteuse unique est que la transmission en liaison montante de l'UE (80) dans une sous-trame est une transmission de canal physique partagé de liaison montante, PUSCH, uniquement, ou une transmission de canal physique de contrôle de liaison montante, PUCCH, uniquement ; et
le mode de transmission en liaison montante avec les caractéristiques à porteuses multiples est que la transmission en liaison montante de l'UE (80) dans une sous-trame est l'une quelconque des transmissions PUSCH ou PUCCH, ou les deux transmissions PUSCH et PUCCH,
le UE (80) est **caractérisé en ce que** les CQI sont une marge de puissance de transmission, PHR,
lorsque le mode de transmission en liaison montante est un mode de transmission avec les caractéristiques à porteuse unique, l'UE (80) calcule la PHR de transmission à travers une formule $PH(i) = P_{CMAX} - P_{USCH}(i)$, où $P_{CMAX}$ est la puissance de transmission maximale autorisée de l'UE (80), $P_{PUSCH}(i)$ est la puissance de transmission de PUSCH dans la sous-trame i, et PH(i) est la PHR de transmission pour la sous-trame i ; et lorsque le mode de transmission en liaison montante est un autre mode de transmission avec les caractéristiques à porteuses multiples, l'UE (80) calcule la PHR de transmission à travers une autre formule $PH(i) - P_{CMAX} - P_{PUSCH}(i) - P_{PUCCH}(i)$, où $P_{CMAX}$ est la puissance de transmission maximale autorisée de l'UE (80), $P_{PUSCH}(i)$ est la puissance de transmission de PUSCH dans la sous-trame i, $P_{PUCCH}$ est la puissance de transmission de PUSCH dans la sous-trame i, et PH(i) est la PHR de transmission pour la sous-trame i.

Uplink control signal areas

Uplink data areas

| uplink sub-frame | uplink sub-frame |

**Fig 1**

PUCCH region

PUSCH

UCI

PUSCH region

UCI

PUCCH region

1 Subframe

**Fig 2**

PUCCH region

PUSCH region

PUCCH region

PUCCH

PUCCH

PUSCH

PUSCH

PUSCH

PUCCH

PUCCH

|←—1 subframe—→|

**Fig 3**

The base station configures the uplink transfer mode of UE — 401

When the uplink transfer mode is different from the current transfer mode of the UE, the base station transmits the message, which carries the uplink transfer mode, to the UE, as well as enables the UE to implement the uplink transfer using the uplink transfer mode, obtain the channel quality information according to the uplink transfer mode, and report it to the base station — 402

The base station receives the channel quality information reported by the UE — 403

The base station configures the uplink channel according to the channel quality information — 404

**Fig 4**

The base station configure the uplink channel according to the channel quality information — 501

The base station notice the uplink transfer mode the UE configured by the signaling — 502

UE receives the uplink transfer mode of the base station configured, and implements the uplink transfer using the uplink transfer mode — 503

UE count transmitting power headroom PHR according to the uplink transfer mode — 504

UE put the PHR send to the base station — 505

The base station receive PHR the UE reported, and implement the uplink channel configuration according to the PHR, including the uplink transfer mode reconfigured according to PHR — 506

same

different

Whether the base station judgment is the uplink transfer mode of the terminal reconfigured as the same as the transfer mode of the UE — 507

**Fig 5**

The terminal complete access process. Base station is the uplink transfer mode the terminal first configured — 601

The base station notice the uplink transfer mode the UE configured by the signaling — 602

UE receives the uplink transfer mode of the base station configured, and implements the uplink transfer using the uplink transfer mode — 603

UE count transmitting power headroom PHR according to the uplink transfer mode — 604

UE put the PUR send to the base station — 605

the base station receive PHR the UE reported, set two PHR threshold, and implement the uplink channel configuration according to the PHR, including the uplink transfer mode reconfigured according to PHR — 606

same

different

whether the base station judgment is the uplink transfer mode of the UE reconfigured as the same as the transfer mode — 607

**Fig 6**

70

base station

71

configuration module

setting sub-module 711

configuration sub-module 712

judgment sub-module 713

processing sub-module 714

transmitter module 72

receiver module 73

**Fig 7**

80

UE

receiver module — 81

obtaining module — 82

report module — 83

**Fig 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1895697 A1
- US 20090103482 A1

- WO 2009020358 A1

**Non-patent literature cited in the description**

- *UL control signalling to support bandwidth extension in LTE-Advanced*